# FASCICULE DE BREVET EUROPEEN

(11) **EP 3 470 887 B1**
(45) Date de publication et mention de la délivrance du brevet: **18.06.2025**
(21) Numéro de dépôt: 18200044.8
(22) Date de dépôt: 12.10.2018
(51) Int. Cl.: G01V 3/12

(54) **DISPOSITIF ET PROCÉDÉ D'INSPECTION DE LA JAMBE D'UN INDIVIDU POUR DÉCELER LE PORT D'OBJETS FRAUDULEUX**
VORRICHTUNG UND VERFAHREN ZUR INSPEKTION DES BEINES EINER PERSON ZUM FESTSTELLEN DES TRAGENS VON UNZULÄSSIGEN GEGENSTÄNDEN
DEVICE AND METHOD FOR INSPECTING THE LEG OF AN INDIVIDUAL TO DETECT THE WEARING OF FRAUDULENT ITEMS

(30) Priorité: 13.10.2017 FR 1759602
(43) Date de publication de la demande: 17.04.2019
(73) Titulaire: Manneschi, Alessandro, 52100 Arezzo (IT)
(72) Inventeur: Manneschi, Alessandro, 52100 Arezzo (IT)
(74) Mandataire: Regimbeau

(56) Documents cités:
- WO-A2-2007/027827
- FR-A1- 3 050 283
- US-A1- 2005 116 825
- US-A1- 2007 073 492
- US-A1- 2007 211 922
- US-A1- 2014 320 331
- US-A1- 2015 253 422

## Description

### DOMAINE DE L'INVENTION

La présente invention concerne le domaine des détecteurs conçus pour la détection d'objets ou matières non autorisés dans une zone à accès protégé.

### ARRIERE-PLAN TECHNOLOGIQUE

Il apparaît aujourd'hui nécessaire de contrôler avec une grande fiabilité les tentatives d'introduction ou de sortie de certains produits, par exemple mais non exclusivement des matières explosives, dans ou hors d'une zone sensible.

Le problème ainsi posé couvre un très large éventail de situations, qui englobe notamment et non limitativement la tentative d'introduction de produits dans une zone protégée, tel qu'un magasin, une école, une gare, un organisme public voir privé, ou la tentative de sortie de produits hors d'un périmètre défini, par exemple en cas de vol dans une entreprise ou sur un site protégé.

Depuis plusieurs années, des scanners corporels (généralement désignés par leur terminologie anglosaxonne « body scanner ») ont été développés afin de détecter des armes, des explosifs, etc. cachés sous les vêtements d'individus pénétrant dans une zone protégée. Tous ces systèmes utilisent des technologies basées sur la détection d'énergies de rayonnement modulées ou émises par le corps des individus inspectés. Les énergies de rayonnement ainsi utilisées comprennent les rayons X, les microondes, les ondes millimétriques, la lumière infrarouge, les ondes térahertz et les ultrasons.

Malgré l'utilisation de plusieurs types d'énergies de rayonnement et de géométries d'imagerie, ces body scanners ont tous pour principe la création d'une image électronique de l'individu sur laquelle les vêtements de l'individu sont transparents. Cette image est ensuite affichée sur un écran et visualisée par un opérateur afin que celui-ci détermine si l'individu porte un objet cible. Pour cela, l'opérateur, qui est formé à la détection d'objets cibles, doit être capable de déterminer si les objets identifiés par le body scanner correspondent à l'anatomie humaine, à un objet autorisé tel qu'un briquet, un mouchoir ou encore des pièces, ou à un objet cible tel qu'une arme ou un explosif.

Il s'avère de nos jours que les individus qui tentent de sortir frauduleusement un produit hors d'une zone protégée ou qui tentent d'introduire un tel produit, utilisent souvent les chaussures, les bottes ou équivalents ou les chaussettes pour dissimuler le produit en question. Ce phénomène semble dû essentiellement au fait que cette zone est difficile à contrôler aisément visuellement ou par palpage manuel.

Toutefois, il apparaît que les body scanners conventionnels ne sont pas capables de détecter de tels produits. D'une part, la détection par des body scanners est parasitée par un bruit généré par les infrastructures au sol. Ainsi, généralement les body scanners ne permettent d'analyser que la partie d'un individu situé à une certaine distance au-dessus du sol. D'autre part, les body scanners conventionnels sont limités dans leur détection en raison de l'épaisseur de la tige de la chaussure ou de la botte qui forme un bouclier et ne permet pas de déterminer, sur la base des technologies actuelles, la forme du pied et donc d'identifier des objets cibles.

C'est pourquoi il arrive que des opérateurs requièrent systématiquement que les individus souhaitant pénétrer ou sortir d'une zone sensible se déchaussent, afin de tenter d'améliorer l'inspection. Une telle requête génère de fortes contraintes et un inconfort.

Le demandeur a donc proposé des dispositifs qui comprennent un bâti qui comporte une embase support formée d'un plateau rectangulaire en forme de marche dont la surface supérieure plane comporte un dessin ou empreinte et une butée destinés à accueillir et positionner un pied unique d'un individu revêtu d'une chaussure, deux panneaux latéraux symétriques qui logent des moyens de détection, et un module d'informations.

On trouvera des exemples de ce dispositif dans les documents FR 2860631, EP 1574879, FR 2889338 (qui correspond à US 2007/073492) et FR 2911212.

Le document US 2015/253422 divulgue un portique comprenant des moyens émetteurs/récepteurs adapté pour inspecter un individu complet.

Les moyens de détection décrits dans les documents mentionnés peuvent être formés de bobinages pour la détection de métaux, de moyens de prélèvement, par exemple sous forme de buses d'aspiration, pour le prélèvement de vapeurs ou de traces de particules, par exemple de stupéfiants ou d'explosifs, de moyens d'analyse à base de résonance magnétique nucléaire comprenant par exemple des bobines d'Helmholtz, ou encore des moyens d'analyse d'impédances complexes ou des détecteurs de radiations radioactives.

### RESUME DE L'INVENTION

Un objectif de l'invention est de proposer de nouveaux moyens de détection permettant d'améliorer la détection d'objets cibles susceptibles d'être camouflés dans une chaussure ou sur la jambe d'un individu.

Un objectif de l'invention est en particulier de proposer des moyens de détection qui soient efficaces quel que soit le lieu de fixation d'un objet frauduleux sur la jambe d'un individu, plus précisément sur le mollet (que ce soit sur l'avant, l'arrière, une partie latérale extérieure ou une partie latérale intérieure de la jambe, voir une combinaison de ces dispositions).

Ces objectifs sont atteints selon l'invention grâce à un dispositif adapté pour inspecter la jambe d'un individu, selon la revendication 1.

L'invention concerne également un procédé de détection d'objets frauduleux portés par la jambe d'un individu à l'aide du dispositif précité, selon la revendication 13.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
- la figure 1 représente une vue en perspective d'un dispositif conforme à la présente invention,
- la figure 2 représente le même dispositif en illustrant schématiquement le positionnement de la partie inférieure d'une jambe d'un individu dans le dispositif,
- la figure 3 représente une vue schématique en coupe longitudinale verticale du dispositif conforme à la présente invention,
- la figure 4a représente schématiquement en vue latérale les émissions microondes à partir d'un panneau en direction du panneau en regard avec un objet non perméable au micro-onde intercalé entre les deux panneaux et les figures 4b, 4c, 4d, 4e, 4f, représentent schématiquement les signaux reçus sur les récepteurs sur le deuxième panneau en fonction de leur positionnement par rapport audit objet,
- la figure 5a représente schématiquement en vue de dessus les émissions/réceptions micro-ondes dans le cas d'une jambe intercalée entre les deux panneaux, et les figures 5b et 5c représentent schématiquement respectivement un signal transmis hors zone de la jambe sans délai et sans atténuation et un signal réfléchi par la jambe,
- la figure 6a représente schématiquement en vue de dessus les émissions/réceptions micro-ondes dans le cas d'une jambe intercalée entre les deux panneaux et portant latéralement un objet frauduleux et la figure 6b représente schématiquement le signal réfléchi par cet objet, et
- la figure 7a représente schématiquement en vue de dessus les émissions/réceptions micro-ondes dans le cas d'une jambe intercalée entre les deux panneaux et portant sur l'avant un objet frauduleux et la figure 7b représente schématiquement le signal transmis à travers cet objet caractérisé par un retard de temps et une atténuation spécifiques.

### DESCRIPTION DETAILLEE D'UN MODE DE REALISATION

On a représenté sur les figures annexées un dispositif conforme à la présente invention comprenant un bâti 100 qui comporte :
- une embase support 110 adaptée pour recevoir un pied d'un individu et formée d'un plateau rectangulaire en forme de marche dont la surface supérieure plane comporte de préférence un dessin ou marquage 112 et une butée 114 destinés à accueillir et positionner un pied unique revêtu d'une chaussure,
- deux panneaux latéraux symétriques 120 adaptés pour être placés de part et d'autre de la jambe d'un individu et qui logent des moyens de détection, et
- un module d'informations 130.

Le dispositif représenté sur les figures annexées peut être conforme quant à sa géométrie, ses dimensions, le tracé du repère de positionnement 112, de la butée 114, de la nature des messages affichés sur le module 130, aux dispositions décrites dans les documents précités FR 2860631, EP 1574879, FR 2889338 et FR 2911212.

Plus précisément selon l'invention, comme indiqué précédemment, comprend en outre :
- des moyens de positionnement 140 du genou d'un individu, par rapport à l'embase support 110 et aux panneaux 120,
- des moyens 200 émetteurs/récepteurs micro-ondes disposés sur chaque panneau latéral 120 en regard du panneau latéral qui lui fait face, et
- des moyens 300 d'analyse des signaux détectés sur les récepteurs microondes correspondant aux signaux transmis à partir d'un panneau 120 jusqu'au panneau en regard et aux signaux réfléchis à partir d'un panneau 120 vers ce même panneau.

Les moyens 140 de positionnement du genou sont formés de préférence d'une traverse 142 reliant les faces internes des deux panneaux latéraux 120 à une hauteur de l'ordre de 40cm.

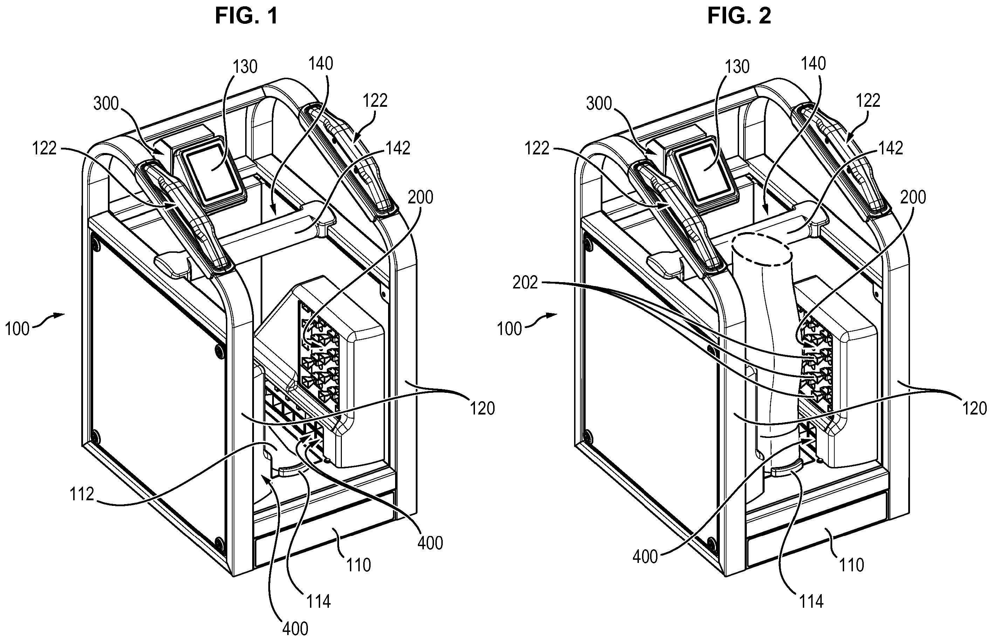

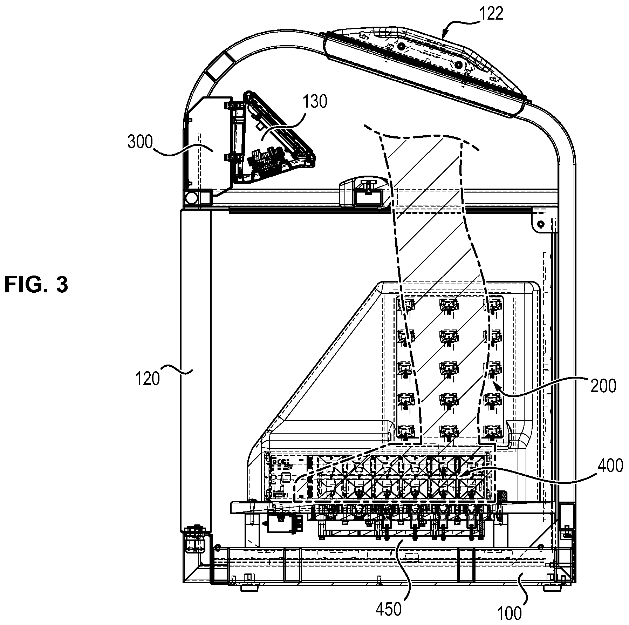

Les moyens 200 émetteurs/récepteurs micro-ondes comprennent de préférence plusieurs transducteurs micro-ondes disposés selon une matrice de lignes horizontales et colonnes verticales sur chaque panneau 120. Comme représenté sur les figures 1, 2 et 3, il est ainsi prévu de préférence cinq rangées horizontales comprenant chacune trois transducteurs micro-ondes.

A titre d'exemples non limitatifs, l'écart horizontal entre deux transducteurs 200 d'une rangée est de l'ordre de 75mm, l'écart vertical entre deux rangées de transducteurs 200 est de l'ordre de 55mm, la rangée de transducteurs 200 la plus élevée est située à une hauteur de l'ordre de 350mm au-dessus de la surface de l'embase support 110.

De préférence, chaque transducteur micro-onde 200 est associé à un cornet 202 de focalisation. La sortie de chaque cornet de focalisation 202 est de préférence située à environ 130mm du plan médian vertical du dispositif.

Les transducteurs 200 opèrent de préférence dans une gamme de fréquences comprises entre 5 et 30GHz et très préférentiellement entre 12 et 20GHz.

Les différents transducteurs 200 situés sur un panneau 120, par exemple les quinze transducteurs répartis en cinq rangées verticales de trois transducteurs, sont situés respectivement coaxialement à un transducteur situé en regard sur le panneau 120 opposé.

Chaque transducteur 200 peut sous le contrôle des moyens 300 travailler alternativement en émetteur ou en récepteur ou en émetteur et récepteur.

Chaque émetteur 200 est de préférence adapté pour émettre en direction d'un récepteur 200 coaxial sur le panneau 120 opposé, ainsi qu'en direction des transducteurs adjacents à ce transducteur 200 coaxial opposé.

De même, chaque récepteur 200 est de préférence adapté pour recevoir à partir d'un émetteur 200 coaxial situé sur le panneau 120 opposé, ainsi qu'à partir des transducteurs adjacents à ce transducteur émetteur 200 coaxial opposé.

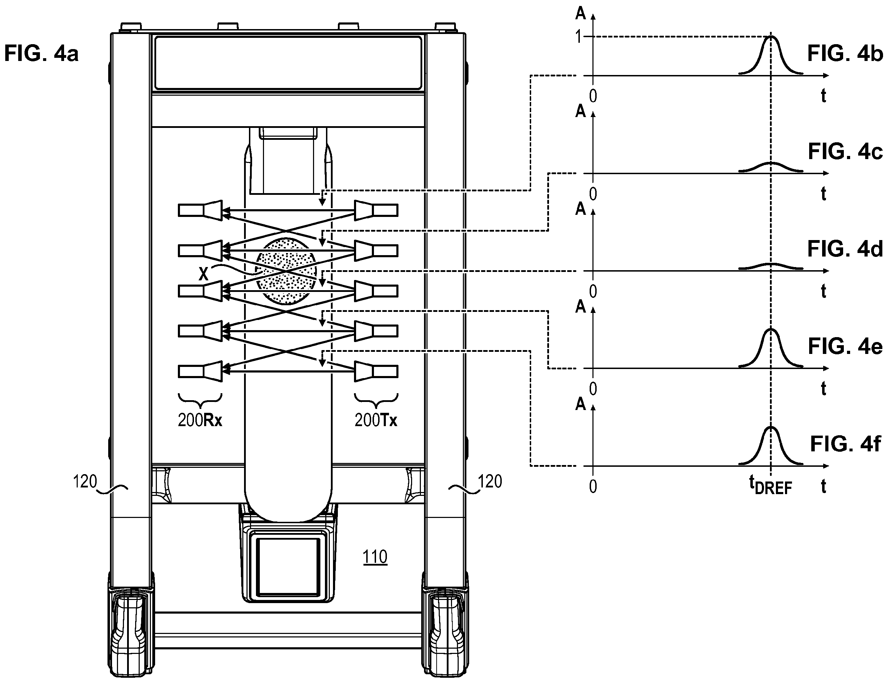

Comme on le voit sur les figures 4, lorsqu'un objet X composé d'une substance non perméable aux micro-ondes est porté par le mollet d'un individu situé en regard de la matrice de transducteur 200, les rayons transmis entre un émetteur 200 situé sur un premier panneau 120 en direction d'un ou plusieurs récepteurs 200 situés sur le deuxième panneau 120 opposé qui ne sont pas occultés par l'objet X parviennent sur les récepteurs avec un léger retard dû à la transmission dans l'air, sans atténuation notable en amplitude (figures 4b, 4e et 4f).

En revanche, les rayons émis par un émetteur 200 en direction de l'objet X sont arrêtés par celui-ci et ne parviennent pas au récepteur 200 en regard (figures 4c et 4d).

Le pilotage des couples émetteurs/récepteurs 200 et de l'analyse des signaux issus d'un récepteur 200 permet donc de détecter la présence sur la jambe d'un individu d'un objet X non perméable aux micro-ondes.

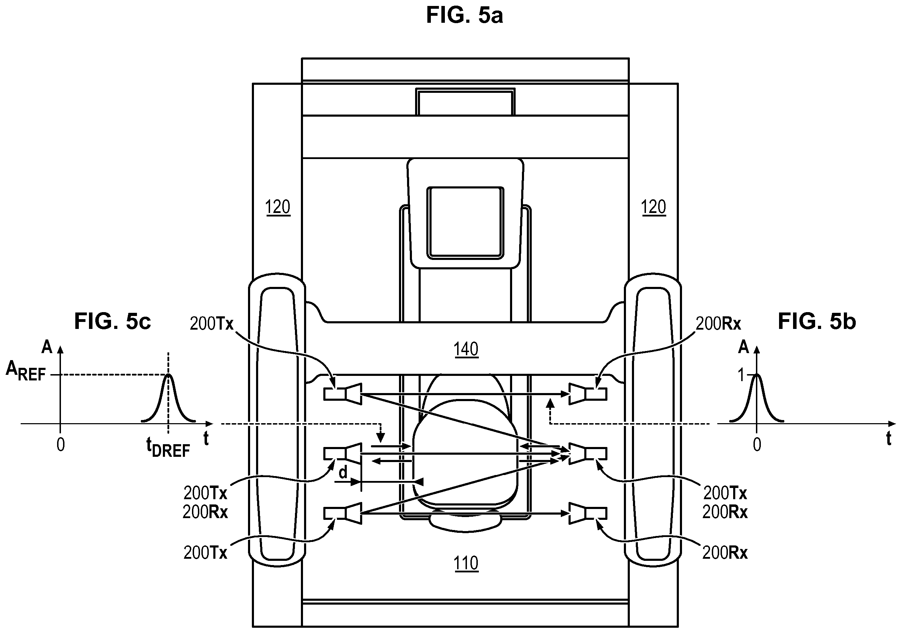

Comme on le voit sur les figures 5, la jambe d'un individu, en raison de sa densité en eau réfléchit quasi-intégralement les micro-ondes.

Ainsi, les rayons transmis entre un émetteur 200 situé sur un premier panneau 120 en direction d'un ou plusieurs récepteurs 200 situés sur le deuxième panneau 120 opposé qui ne sont pas occultés par la jambe parviennent là encore sur les récepteurs opposés, pratiquement sans retard et sans atténuation notable en amplitude (figure 5b).

En revanche, les rayons émis par un émetteur 200 en direction de la jambe sont réfléchis par la jambe en direction de l'émetteur fonctionnant en récepteur avec un retard égal à 2*d/c, d représentant la distance entre l'émetteur et la jambe et c représentant la célérité des micro-ondes dans l'air (figure 5c).

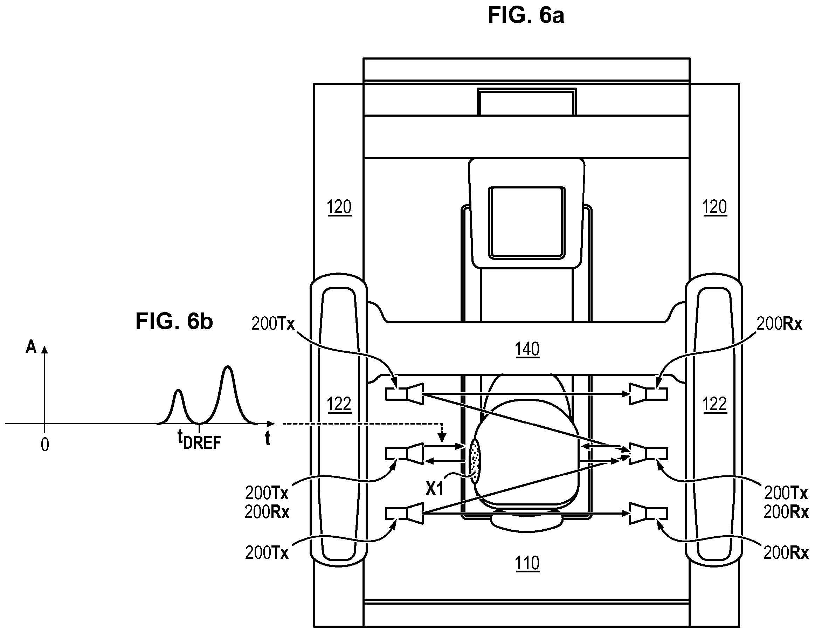

Les figures 6 représentent le fonctionnement du dispositif pour la détection d'un objet frauduleux X1 porté latéralement sur le mollet d'un individu.

Là encore, les rayons transmis entre un émetteur 200 situé sur un premier panneau 120 en direction d'un ou plusieurs récepteurs 200 situés sur le deuxième panneau 120 opposé qui ne sont pas occultés par la jambe parviennent sur les récepteurs opposés, pratiquement sans retard et sans atténuation notable en amplitude, comme représenté sur la figure 5b.

En revanche, les rayons émis par un émetteur 200 en direction de l'objet X1 sont réfléchis d'une part par la face extérieure de l'objet X1 et d'autre part par la jambe en direction de l'émetteur fonctionnant en récepteur, comme représenté sur la figure 6b.

Comme représenté sur la figure 6b, le récepteur 200 reçoit dans ce cas deux échos successifs, avec des retards différents : un premier écho dû à la réflexion sur la substance X1 et un deuxième écho dû à la réflexion sur la jambe.

Généralement, selon des tests réalisés par les inventeurs, le deuxième écho sur la jambe a une amplitude plus importante que le premier écho sur la substance X1 qui n'est que partiellement réflectrice.

L'analyse comparée des signaux du type illustré sur la figure 5b, 5c et 6b, permet par comparaison de détecter un objet frauduleux porté latéralement sur le mollet d'un individu.

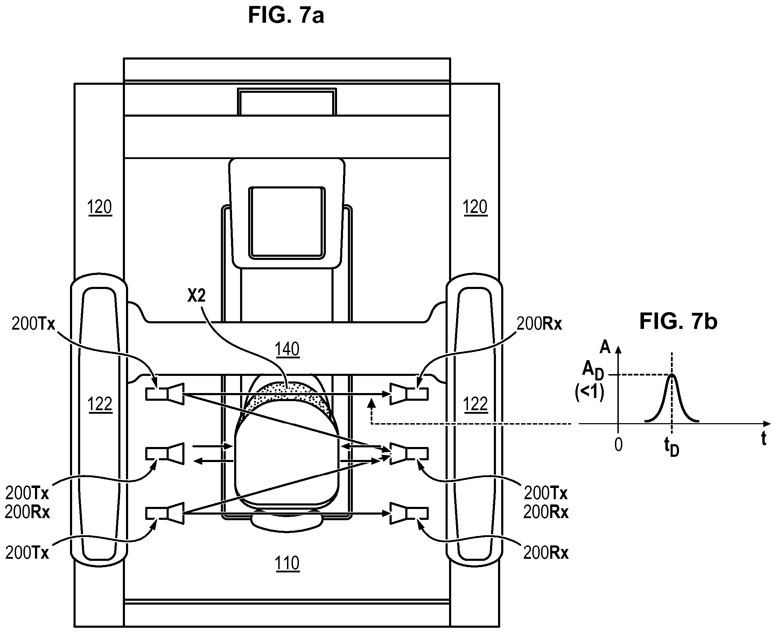

Les figures 7 représentent le fonctionnement du dispositif pour la détection d'un objet frauduleux X2 porté sur l'avant du mollet d'un individu.

Là encore, les rayons transmis entre un émetteur 200 situé sur un premier panneau 120 en direction d'un ou plusieurs récepteurs 200 situés sur le deuxième panneau 120 opposé qui ne sont pas occultés par la jambe parviennent sur les récepteurs opposés, pratiquement sans retard et sans atténuation notable en amplitude, comme représenté sur la figure 5b.

En revanche, les rayons émis par un émetteur 200 en direction de l'objet X2 sans être occultés par la jambe sont transmis avec un retard et une atténuation dû à la substance X2 au récepteur en regard situé sur le panneau opposé.

L'analyse comparée des signaux du type illustré sur la figure 5b, 5c et 7b, permet par comparaison de détecter un objet frauduleux porté sur l'avant (de même sur l'arrière) du mollet d'un individu.

L'homme de l'art comprendra à la lecture de la description qui précède que l'invention permet la détection de substances frauduleuses non métalliques, par exemple d'explosifs ou de drogue, portées par le bas de la jambe d'un individu par détection du retard et de l'amplitude de signaux micro-ondes transmis à travers la substance et/ou réfléchi par la substance, ainsi que par la jambe.

De préférence, la matrice de transducteurs 200 est adaptée pour couvrir toute la partie inférieure de la jambe entre la cheville et le genou et les moyens d'analyse 300 procèdent par comparaison des signaux transmis et/ou réfléchis avec des valeurs de transmission dans l'air et/ou de signaux réfléchis sur une jambe dépourvue d'objet frauduleux.

Les moyens 300 sont adaptés pour générer une alarme lorsqu'un écart significatif dépassant un seuil est détecté par rapport aux valeurs de référence.

Le positionnement de la jambe sur le marquage 112 et du bon positionnement du genou en appui sur la traverse 142 peuvent être contrôlés par des cellules optiques adaptées placées sur les panneaux 120.

De préférence, dans le cadre de l'invention, les moyens 300 sont adaptés pour réaliser au moins l'une des étapes suivantes et de préférence la combinaison de l'ensemble des étapes suivantes :
- mesure du retard et de l'amplitude d'une transmission directe de micro-ondes entre chaque paire d'émetteurs 200Tx et récepteur 200Rx coaxiaux situés sur les deux panneaux opposés 120,
- mesure du retard et de l'amplitude d'une transmission oblique de micro-ondes entre chaque émetteur 200Tx situé sur un panneau 120 et les récepteurs 200Rx qui entourent le récepteur situé sur le panneau opposé 120 coaxial de l'émetteur,
- mesure du retard et de l'amplitude de l'onde micro-ondes émise par chaque transducteur émetteur 200Tx et réfléchie vers le même transducteur formant récepteur 200Rx ou vers les récepteurs 200Rx entourant ce dernier, par une jambe ou par une substance frauduleuse (non métallique) placée sur ou autour de la jambe,
- détection de la présence d'un double écho d'ondes micro-ondes réfléchi par une substance frauduleuse et par la jambe,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les microondes,
- comparaison des ondes micro-ondes transmises directement avec des microondes transmises sur des transducteurs adjacents et génération d'une alarme en cas d'écart supérieur à un seuil détecté entre les différents signaux (assimilable à la présence d'une substance non métallique et non perméable aux micro-ondes),
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux (assimilable à la présence d'une substance non métallique et non perméable aux microondes),
- comparaison d'un double écho détecté avec des valeurs de transmission dans le vide et génération d'une alarme en cas de détection d'un retard supérieur à un seuil entre les pics des deux échos avec une amplitude supérieur à un seuil (représentatif d'une substance qui réfléchit une part de l'onde (premier écho) et qui retarde et atténue le signal non réfléchi (deuxième écho)).

Le dispositif conforme à la présente invention qui vient d'être décrit peut être complété par des équipements auxiliaires, par exemple par des moyens formant détecteur de métaux à base de bobinages intégrés aux panneaux latéraux 120 et/ou par des moyens de prélèvement et d'analyse de substances, vapeur ou de traces de particules et/ou par des moyens d'analyse type résonance magnétique nucléaire, des moyens d'analyse d'impédance complexe et/ou des moyens détecteurs de radiations radio-actives.

De tels moyens sont connus en soi dans leur structure générale et ne seront donc pas décrits plus en détail par la suite.

Le dispositif conforme à la présente invention décrit précédemment peut également être complété par les moyens qui vont maintenant être décrits qui correspondent à l'objet des demandes de brevet déposées en France sous les numéros FR 1653385, FR 1655726 et FR 1655729 et qui peuvent être intégrés à l'embase 110 et/ou aux panneaux latéraux 120.

Ainsi dans le cadre de l'invention, le dispositif 100 peut comprendre
- des moyens émetteurs/récepteurs micro-ondes 400 (par exemple dans la gamme 5GHz-30GHz, avantageusement dans la gamme 12GHz-20GHz) intégrés de préférence à la base de chaque panneau latéral 120 et répartis sur la longueur de l'embase support 110, (ces moyens émetteurs micro-ondes et moyens récepteurs micro-ondes associés placés respectivement de part et d'autre de la semelle de la chaussure sont avantageusement adaptés pour une détection sur un moyen récepteur du signal provenant d'un moyen émetteur placé directement en regard et du signal provenant d'un moyen émetteur placé en oblique par rapport au moyen récepteur, au même niveau vertical ou à une hauteur différente),
- des moyens de mesure de la largeur d'un élément, typiquement une semelle, intercalé entre ces moyens 400 émetteurs/récepteurs micro-ondes,
- des moyens 300 d'analyse d'au moins un paramètre du délai de transmission entre les moyens émetteurs/récepteurs micro-ondes 400 et/ou de l'amplitude du signal transmis entre les moyens émetteurs/récepteurs micro-ondes 400, et
- des moyens de normalisation de l'analyse précitée par rapport à une unité de taille de largeur standard obtenue sur la base des moyens de mesure de largeur.

Les moyens 300 peuvent également être adaptés pour analyser l'amplitude des signaux issus des récepteurs pour en déduire une information sur l'épaisseur de la semelle.

Ces moyens 400 forment au moins un moyen émetteur micro-ondes placé d'un côté de l'embase 110 et au moins un moyen récepteur micro-ondes placé sur le côté opposé de l'embase 110 de sorte que les micro-ondes émis par le moyen émetteur micro-ondes traversent la semelle de la chaussure placée sur l'embase support 110 avant de parvenir au moyen récepteur micro-ondes associé placé sur le côté opposé de l'embase 110.

Les moyens de mesure de la largeur de l'élément intercalé entre les moyens émetteur/récepteur micro-ondes 400 comprennent par exemple une pluralité de moyens émetteur/récepteur infra-rouges adaptés pour mesurer le temps de propagation aller-retour entre un émetteur infra-rouge et le récepteur infra-rouge associé.

Il peut ainsi être prévu plusieurs paires de moyens émetteurs infrarouges et de moyens récepteurs infrarouges associés placés de chaque côté de l'embase 110 de sorte que les infrarouges émis par chaque moyen émetteur infrarouges se réfléchissent sur la semelle de la chaussure placée sur l'embase support 110 avant de parvenir au moyen récepteur infrarouges associé placé sur le même côté de l'embase 110.

Le dispositif peut également comprendre des moyens, de préférence à base de micro-ondes et préférentiellement une pluralité de tels moyens répartis sur la longueur du dispositif, adaptés pour déceler une stratification par empilement vertical, dans la semelle, par détection d'échos successifs suite à une émission d'ondes vers la semelle.

Il peut être prévu des moyens de normalisation du signal issu des moyens de détection d'une stratification verticale, sur la base d'un signal représentatif de la hauteur estimée de la semelle,

Le dispositif peut comprendre en outre des moyens de mesure de la capacité électrique formée par la semelle d'une chaussure placée sur l'embase support 110. De tels moyens peuvent comprendre des électrodes sur des poignées 122 placées en partie supérieure des panneaux 120. Ces électrodes formées sur les poignées 122 sont par exemple réalisées par un matériau électriquement conducteur noyé dans la masse des panneaux 120. Un générateur électrique (générant par exemple une tension comprise entre 0,1V et 10V, de préférence de l'ordre de 1 volt) est relié en série des poignées 122 prévues sur des panneaux latéraux 120 et d'électrodes placées sur l'embase support (110), par exemple d'électrodes placées sur l'embase support 110 et de préférence concentriques de cornets associés à des transducteurs micro-ondes 450 adaptés pour générer des micro-ondes verticalement dans une semelle.

Bien entendu la présente invention n'est pas limitée aux modes de réalisation précédemment décrits, mais s'étend à toutes variantes conformes à son esprit.

En particulier, on a décrit précédemment la mise en œuvre de la présente invention dans le contexte d'un dispositif dont les bases ont été précédemment décrites dans les documents FR 2860631, EP 1574879, FR 2889338 et FR 2911212, comprenant une embase support 10 formée d'une marche dont la surface supérieure comporte une empreinte 12 et une butée 14 destinés à accueillir et positionner un pied unique d'un individu revêtu d'une chaussure.

Cependant l'invention n'est pas limitée à ce mode de réalisation particulier. Comme on l'a représenté sur la figure 23 annexée, la présente invention peut également s'appliquer à des dispositifs dans lesquels l'embase support est adaptée pour recevoir simultanément les deux pieds P d'un individu.

Dans ce cas il est cependant préférable, pour permettre une détection respectivement et individuellement sur chacun des deux pieds P d'un individu sous test, de prévoir en saillie sur la surface supérieure de l'embase trois blocs 320, 330 et 340 entre lesquels doivent être positionnés les deux pieds P de sorte que le bloc central 330 soit placé entre les deux pieds P, tandis que les deux blocs latéraux 320 et 340 sont disposés respectivement sur l'extérieur des pieds. Le bloc central 330 loge des moyens de détection associés respectivement aux blocs 320 et 340 pour permettre les différentes mesures précitées respectivement sur chacun des deux pieds P. Ainsi le bloc central 330 loge dans ce cas de préférence des moyens émetteurs 142/récepteurs 144 pour la mesure de l'amplitude d'absorption des micro-ondes et du temps de propagation, ainsi que des transducteurs infra-rouges 152/154 pour la mesure de largeur de chacune des deux semelles S, séparément.

## Revendications

1. Dispositif adapté pour inspecter la jambe d'un individu, qui comporte :
- une embase support (110) adaptée pour recevoir un pied d'un individu,
- deux panneaux latéraux (120) adaptés pour être placés de part et d'autre de la jambe d'un individu,
- des moyens (112, 114, 142) de positionnement du pied et de la jambe par rapport à l'embase support (110) et aux panneaux (120),
- des moyens transducteurs (200) émetteurs/récepteurs micro-ondes disposés sur chaque panneau latéral (120) en regard du panneau latéral qui lui fait face, et
le dispositif étant **caractérisé en ce que** :
chaque émetteur (200) est adapté pour émettre en direction d'un récepteur (200) coaxial sur le panneau (120) opposé, ainsi qu'en direction des transducteurs adjacents à ce récepteur (200) coaxial opposé,
chaque récepteur (200) est adapté pour recevoir à partir d'un émetteur (200) coaxial situé sur le panneau (120) opposé, ainsi qu'à partir des transducteurs adjacents à cet émetteur (200) coaxial opposé, et il comprend des moyens (300) d'analyse des signaux détectés sur les récepteurs micro-ondes (200) correspondant aux signaux transmis à partir d'un panneau (120) jusqu'au panneau en regard et correspondant ux signaux réfléchis à partir d'un panneau (120) vers ce même panneau.

2. Dispositif selon la revendication 1, dans lequel les moyens d'analyse (300) procèdent par analyse du retard et de l'amplitude des signaux reçus par rapport à une référence.

3. Dispositif selon l'une des revendications 1 ou 2, dans lequel les moyens d'analyse (300) procèdent par comparaison des signaux reçus sur un récepteur avec des signaux de référence représentatifs de la transmission dans le vide et/ou de réflexion sur une jambe.

4. Dispositif selon l'une des revendications 1 à 3, dans lequel les moyens d'analyse (300) génèrent une alarme en cas de détection d'un écart supérieur à un seuil entre les signaux reçus et une référence.

5. Dispositif selon l'une des revendications 1 à 4, **caractérisé par le fait qu'**il comprend des moyens (140) de positionnement du genou formés d'une traverse (142) reliant les faces internes des deux panneaux latéraux (120).

6. Dispositif selon l'une des revendications 1 à 5, **caractérisé par** le fait les moyens (200) émetteurs/récepteurs micro-ondes comprennent plusieurs transducteurs micro-ondes disposés selon une matrice de lignes horizontales et colonnes verticales sur chaque panneau (120).

7. Dispositif selon l'une des revendications 1 à 6, dans lequel les moyens (200) émetteurs/récepteurs micro-ondes comprennent une rangée de transducteurs micro-ondes la plus élevée située à une hauteur de l'ordre de 350mm au-dessus de la surface de l'embase support (110).

8. Dispositif selon l'une des revendications 1 à 7, dans lequel les moyens (200) émetteurs/récepteurs micro-ondes comprennent cinq rangées horizontales de transducteurs micro-ondes comprenant chacune trois transducteurs micro-ondes, l'écart horizontal entre deux transducteurs (200) d'une rangée étant de l'ordre de 75mm, tandis que l'écart vertical entre deux rangées de transducteurs est de l'ordre de 55mm.

9. Dispositif selon l'une des revendications 1 à 8, dans lequel chaque transducteur micro-onde (200) est associé à un cornet de focalisation (202).

10. Dispositif selon l'une des revendications 1 à 9, dans lequel les transducteurs (200) opèrent dans une gamme de fréquences comprises entre 5 et 30GHz et très préférentiellement entre 12 et 20GHz.

11. Dispositif selon l'une des revendications 1 à 10, dans lequel chaque transducteur (200) est adapté pour travailler alternativement en émetteur ou en récepteur ou en émetteur et récepteur.

12. Dispositif selon l'une des revendications 1 à 11, dans lequel les moyens d'analyse (300) sont adaptés pour opérer au moins l'une des fonctions suivantes :
- mesure du retard et de l'amplitude d'une transmission directe de micro-ondes entre chaque paire d'émetteurs (200Tx) et récepteur (200Rx) coaxiaux situés sur les deux panneaux opposés (120),
- mesure du retard et de l'amplitude d'une transmission oblique de micro-ondes entre chaque émetteur (200Tx) situé sur un panneau (120) et les récepteurs (200Rx) qui entourent le récepteur situé sur le panneau opposé (120) coaxial de l'émetteur,
- mesure du retard et de l'amplitude de l'onde micro-ondes émise par chaque transducteur émetteur (200Tx) et réfléchie vers le même transducteur formant récepteur (200Rx) ou vers les récepteurs (200Rx= entourant ce dernier, par une jambe ou par une substance frauduleuse placée sur ou autour de la jambe,
- détection de la présence d'un double écho d'ondes micro-ondes réfléchi par une substance frauduleuse et par la jambe,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les microondes,
- comparaison des ondes micro-ondes transmises directement avec des microondes transmises sur des transducteurs adjacents et génération d'une alarme en cas d'écart supérieur à un seuil détecté entre les différents signaux,
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux,
- comparaison d'un double écho détecté avec des valeurs de transmission dans le vide et génération d'une alarme en cas de détection d'un retard supérieur à un seuil entre les pics des deux échos avec une amplitude supérieur à un seuil.

13. Procédé d'inspection de la jambe d'un individu, à l'aide d'un dispositif conforme à l'une des revendications 1 à 12, comportant les étapes suivantes :
- positionner un pied et une jambe d'un individu par rapport à l'embase support (110) et aux panneaux (120) du dispositif, - émettre des ondes micro-ondes depuis un émetteur sur un panneau en direction d'un récepteur (200) coaxial sur le panneau (120) opposé, ainsi qu'en direction des transducteurs adjacents à ce récepteur (200) coaxial opposé,
- recevoir des ondes micro-ondes à partir d'un émetteur (200) coaxial situé sur le panneau (120) opposé, ainsi qu'à partir des transducteurs adjacents à cet émetteur (200) coaxial opposé,
- analyser les signaux détectés par les récepteurs micro-ondes (200) correspondant aux signaux transmis à partir d'un panneau (120) jusqu'au panneau en regard et correspondant aux signaux réfléchis à partir d'un panneau (120) vers ce même panneau et
- générer une alarme lorsque l'analyse révèle un écart dans le délai de transmission ou dans l'amplitude des signaux, par rapport à une référence, supérieur à un seuil.

14. Procédé selon la revendication 13, **caractérisé par le fait qu'**il met en œuvre au moins une des étapes suivantes et de préférence une combinaison des étapes suivantes :
- mesure du retard et de l'amplitude d'une transmission directe de micro-ondes entre chaque paire d'émetteurs (200Tx) et récepteur (200Rx) coaxiaux situés sur les deux panneaux opposés (120),
- mesure du retard et de l'amplitude d'une transmission oblique de micro-ondes entre chaque émetteur (200Tx) situé sur un panneau (120) et les récepteurs (200Rx) qui entourent le récepteur situé sur le panneau opposé (120) coaxial de l'émetteur,
- mesure du retard et de l'amplitude de l'onde micro-ondes émise par chaque transducteur émetteur (200Tx) et réfléchie vers le même transducteur formant récepteur (200Rx) ou vers les récepteurs (200Rx= entourant ce dernier, par une jambe ou par une substance frauduleuse placée sur ou autour de la jambe,
- détection de la présence d'un double écho d'ondes micro-ondes réfléchi par une substance frauduleuse et par la jambe,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les microondes,
- comparaison des ondes micro-ondes transmises directement avec des microondes transmises sur des transducteurs adjacents et génération d'une alarme en cas d'écart supérieur à un seuil détecté entre les différents signaux,
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux,
- comparaison d'un double écho détecté avec des valeurs de transmission dans le vide et génération d'une alarme en cas de détection d'un retard supérieur à un seuil entre les pics des deux échos avec une amplitude supérieur à un seuil.

## Patentansprüche

1. Vorrichtung, die geeignet ist, das Bein einer Person zu inspizieren, die aufweist:
- eine Trägerbasis (110), die geeignet ist, einen Fuß einer Person aufzunehmen,
- zwei seitliche Platten (120), die geeignet sind, auf beiden Seiten des Beins einer Person platziert zu sein,
- Mittel (112, 114, 142) zur Positionierung des Fußes und des Beins in Bezug auf die Trägerbasis (110) und die Platten (120),
- Mikrowellen-Sende-/Empfangs-Wandlermittel (200), die auf jeder seitlichen Platte (120) der ihr gegenüberliegenden seitlichen Platte zugewandt angeordnet sind, und
wobei die Vorrichtung **dadurch gekennzeichnet ist, dass**:
jeder Sender (200) geeignet ist, in Richtung eines koaxialen Empfängers (200) auf der gegenüberliegenden Platte (120) sowie in Richtung der Wandler, die diesem gegenüberliegenden koaxialen Empfänger (200) benachbart sind, zu senden,
jeder Empfänger (200) geeignet ist, von einem koaxialen Sender (200), der sich auf der gegenüberliegenden Platte (120) befindet, sowie von den Wandlern, die diesem gegenüberliegenden koaxialen Sender (200) benachbart sind, zu empfangen, und
sie Mittel (300) zur Analyse der von den Mikrowellenempfängern (200) erfassten Signale umfasst, die den von einer Platte (120) bis zur gegenüberliegenden Platte übertragenen Signalen entsprechen und den von einer Platte (120) zu derselben Platte reflektierten Signalen entsprechen.

2. Vorrichtung nach Anspruch 1, wobei die Analysemittel (300) durch Analyse der Verzögerung und der Amplitude der empfangenen Signale im Vergleich zu einer Referenz vorgehen.

3. Vorrichtung nach einem der Ansprüche 1 oder 2, wobei die Analysemittel (300) durch Vergleich der von einem Empfänger empfangenen Signale mit Referenzsignalen vorgehen, die für die Übertragung im Vakuum und/oder für die Reflexion an einem Bein repräsentativ sind.

4. Vorrichtung nach einem der Ansprüche 1 bis 3, wobei die Analysemittel (300) einen Alarm erzeugen, wenn eine Abweichung über einem Schwellenwert zwischen den empfangenen Signalen und einer Referenz festgestellt wird.

5. Vorrichtung nach einem der Ansprüche 1 bis 4, **dadurch gekennzeichnet, dass** sie Mittel (140) zur Positionierung des Knies umfasst, die aus einem Querträger (142) bestehen, der die Innenseiten der beiden seitlichen Platten (120) verbindet.

6. Vorrichtung nach einem der Ansprüche 1 bis 5, **dadurch gekennzeichnet, dass** die Mikrowellen-Sende-/Empfangsmittel (200) mehrere Mikrowellenwandler umfassen, die gemäß einer Matrix aus horizontalen Zeilen und vertikalen Spalten auf jeder Platte (120) angeordnet sind.

7. Vorrichtung nach einem der Ansprüche 1 bis 6, wobei die Mikrowellen-Sende-/Empfangsmittel (200) eine oberste Reihe von Mikrowellenwandlern umfassen, die sich in einer Höhe in der Größenordnung von 350 mm über der Oberfläche der Trägerbasis (110) befinden.

8. Vorrichtung nach einem der Ansprüche 1 bis 7, wobei die Mikrowellen-Sende-/Empfangsmittel (200) fünf horizontale Reihen von Mikrowellenwandlern mit jeweils drei Mikrowellenwandlern umfassen, wobei der horizontale Abstand zwischen zwei Wandlern (200) in einer Reihe in der Größenordnung von 75 mm liegt, während der vertikale Abstand zwischen zwei Wandlerreihen in der Größenordnung von 55 mm liegt.

9. Vorrichtung nach einem der Ansprüche 1 bis 8, wobei jeder Mikrowellenwandler (200) einem Fokussierhorn (202) zugeordnet ist.

10. Vorrichtung nach einem der Ansprüche 1 bis 9, wobei die Wandler (200) in einem Frequenzbereich zwischen 5 und 30 GHz und sehr bevorzugt zwischen 12 und 20 GHz operieren.

11. Vorrichtung nach einem der Ansprüche 1 bis 10, wobei jeder Wandler (200) geeignet ist, abwechselnd als Sender oder als Empfänger oder als Sender und Empfänger zu arbeiten.

12. Vorrichtung nach einem der Ansprüche 1 bis 11, wobei die Analysemittel (300) geeignet sind, mindestens eine der folgenden Funktionen zu erfüllen:
- Messen der Verzögerung und der Amplitude einer direkten Übertragung von Mikrowellen zwischen jedem Paar koaxialer Sender (200Tx) und Empfänger (200Rx), die sich auf den beiden gegenüberliegenden Platten (120) befinden,
- Messen der Verzögerung und der Amplitude einer schrägen Übertragung von Mikrowellen zwischen jedem Sender (200Tx), der sich auf einer Platte (120) befindet, und den Empfängern (200Rx), die den Empfänger umgeben, der sich auf der gegenüberliegenden Platte (120) koaxial zu dem Sender befindet,
- Messen der Verzögerung und der Amplitude der Mikrowellenwelle, die von jedem sendenden Wandler (200Tx) gesendet und zu demselben Wandler, der einen Empfänger (200Rx) bildet, oder zu den diesen umgebenden Empfängern (200Rx) von einem Bein oder von einer unzulässigen Substanz, die auf dem oder um das Bein herum angeordnet ist, reflektiert wird,
- Erkennen des Vorhandenseins eines doppelten Mikrowellenwellenechos, das von einer unzulässigen Substanz und von dem Bein reflektiert wird,
- Vergleichen der direkt übertragenen Mikrowellenwellen mit einem Übertragungs-Referenzwert im Vakuum und Übertragen eines Alarms bei Feststellung einer Verzögerung über einem Schwellenwert und mit einer Amplitude, die einer Palette von Substanzen entspricht, die die Mikrowellen verzögern und dämpfen,
- Vergleichen der direkt übertragenen Mikrowellenwellen mit Mikrowellen, die über benachbarte Wandler übertragen werden, und Erzeugen eines Alarms bei einer Abweichung zwischen den verschiedenen Signalen über einem festgestellten Schwellenwert,
- Vergleichen der schrägen Mikrowellenwellen mit einem Referenzwert im Vakuum und Erzeugen eines Alarms bei Feststellung einer Verzögerung über einem Schwellenwert und mit einer Amplitude, die einer vorbestimmten Palette entspricht, die für Substanzen repräsentativ ist, die Mikrowellen verzögern und dämpfen,
- Vergleichen der schräg übertragenen Mikrowellenwellen mit den direkt benachbarten übertragenen Mikrowellenwellen und Erzeugen eines Alarms bei einer Abweichung zwischen den verschiedenen Signalen über einem festgestellten Schwellenwert,
- Vergleichen eines erkannten Doppelechos mit Übertragungswerten im Vakuum und Erzeugen eines Alarms bei Feststellung einer Verzögerung über einem Schwellenwert zwischen den Spitzen der beiden Echos mit einer Amplitude über einem Schwellenwert.

13. Verfahren zur Inspektion des Beins einer Person mithilfe einer Vorrichtung nach einem der Ansprüche 1 bis 12, das die folgenden Schritte aufweist:
- Positionieren eines Fußes und eines Beins einer Person in Bezug auf die Trägerbasis (110) und die Platten (120) der Vorrichtung,
- Senden von Mikrowellenwellen von einem Sender auf einer Platte in Richtung eines koaxialen Empfängers (200) auf der gegenüberliegenden Platte (120) sowie in Richtung der Wandler, die diesem gegenüberliegenden koaxialen Empfänger (200) benachbart sind,
- Empfangen von Mikrowellenwellen von einem koaxialen Sender (200) auf der gegenüberliegenden Platte (120) sowie von den Wandlern, die diesem gegenüberliegenden koaxialen Sender (200) benachbart sind,
- Analysieren der von den Mikrowellenempfängern (200) erfassten Signale, die den von einer Platte (120) zu der gegenüberliegenden Platte übertragenen Signalen entsprechen und den von einer Platte (120) zu derselben Platte reflektierten Signalen entsprechen, und
- Erzeugen eines Alarms, wenn sich aus der Analyse eine Abweichung bei der Übertragungszeit oder der Amplitude der Signale in Bezug auf eine Referenz über einem Schwellenwert ergibt.

14. Verfahren nach Anspruch 13, **dadurch gekennzeichnet, dass** es mindestens einen der folgenden Schritte und vorzugsweise eine Kombination der folgenden Schritte durchführt:
- Messen der Verzögerung und der Amplitude einer direkten Übertragung von Mikrowellen zwischen jedem Paar koaxialer Sender (200Tx) und Empfänger (200Rx), die sich auf den beiden gegenüberliegenden Platten (120) befinden,
- Messen der Verzögerung und der Amplitude einer schrägen Übertragung von Mikrowellen zwischen jedem Sender (200Tx), der sich auf einer Platte (120) befindet, und den Empfängern (200Rx), die den Empfänger umgeben, der sich auf der gegenüberliegenden Platte (120) koaxial zu dem Sender befindet,
- Messen der Verzögerung und der Amplitude der Mikrowellenwelle, die von jedem sendenden Wandler (200Tx) gesendet und zu demselben Wandler, der einen Empfänger (200Rx) bildet, oder zu den diesen umgebenden Empfängern (200Rx) von einem Bein oder von einer unzulässigen Substanz, die auf dem oder um das Bein herum angeordnet ist, reflektiert wird,
- Erkennen des Vorhandenseins eines doppelten Mikrowellenwellenechos, das von einer unzulässigen Substanz und von dem Bein reflektiert wird,
- Vergleichen der direkt übertragenen Mikrowellenwellen mit einem Übertragungs-Referenzwert im Vakuum und Übertragen eines Alarms bei Feststellung einer Verzögerung über einem Schwellenwert und mit einer Amplitude, die einer Palette von Substanzen entspricht, die die Mikrowellen verzögern und dämpfen,
- Vergleichen der direkt übertragenen Mikrowellenwellen mit Mikrowellen, die über benachbarte Wandler übertragen werden, und Erzeugen eines Alarms bei einer Abweichung zwischen den verschiedenen Signalen über einem festgestellten Schwellenwert,
- Vergleichen der schrägen Mikrowellenwellen mit einem Referenzwert im Vakuum und Erzeugen eines Alarms bei Feststellung einer Verzögerung über einem Schwellenwert und mit einer Amplitude, die einer vorbestimmten Palette entspricht, die für Substanzen repräsentativ ist, die Mikrowellen verzögern und dämpfen,
- Vergleichen der schräg übertragenen Mikrowellenwellen mit den direkt benachbarten übertragenen Mikrowellenwellen und Erzeugen eines Alarms bei einer Abweichung zwischen den verschiedenen Signalen über einem festgestellten Schwellenwert,
- Vergleichen eines erkannten Doppelechos mit Übertragungswerten im Vakuum und Erzeugen eines Alarms bei Feststellung einer Verzögerung über einem Schwellenwert zwischen den Spitzen der beiden Echos mit einer Amplitude über einem Schwellenwert.

## Claims

1. A device adapted to inspect the leg of an individual, which comprises:
- a support base (110) adapted to receive a foot of an individual,
- two lateral panels (120) adapted to be placed on either side of the leg of an individual,
- positioning means (112, 114, 142) of the foot and of the leg relative to the support base (110) and to the panels (120),
- microwave sender/receiver transducer means (200) arranged on each lateral panel (120) opposite the lateral panel which is facing it, and
the device being **characterized in that**:
each emitter (200) is adapter to emit towards a coaxial receiver (200) on the opposite panel (120), as well as towards transducers (200) adjacent to this coaxial opposite receiver (200),
each receiver (200) is adapter to receive from a coaxial emitter (200) on the opposite panel (120), as well as from transducers (200) adjacent to this coaxial opposite emitter (200), and
it comprises analysis means (300) of signals detected on the microwave receivers (200) corresponding to the signals transmitted from a panel (120) to the opposite panel and corresponding to the signals reflected from a panel (120) towards this same panel.

2. The device according to claim 1, **characterized in that** the analysis means (300) perform analysis of the delay and amplitude of the signals received relative to a reference.

3. The device according to any one of claims 1 or 2, wherein the analysis means (300) undertake comparison of signals received on a receiver with reference signals representative of the transmission in a void and/or reflection on a leg.

4. The device according to any one of claims 1 to 3, wherein the analysis means (300) generate an alarm in case of detection of a gap greater than a threshold between the received signals and a reference.

5. The device according to any one of claims 1 to 4, **characterized in that** it comprises positioning means (140) of the knee formed by a cross-beam (142) connecting the internal faces of the two lateral panels (120).

6. The device according to any one of claims 1 to 5, **characterized in that** the microwave sender/receiver means (200) comprise several microwave transducers arranged according to a matrix of horizontal lines and vertical columns on each panel (120).

7. The device according to any one of claims 1 to 6, wherein the microwave receiver/sender means (200) comprise a row of microwave transducers, the highest located at a height of the order of 350mm above the surface of the support base (110).

8. The device according to any one of claims 1 to 7, wherein the microwave receiver/sender means (200) comprise five horizontal rows of microwave transducers each comprising three microwave transducers, the horizontal gap between two transducers (200) of a row being of the order of 75mm, whereas the vertical gap between two rows of transducers is of the order of 55mm.

9. The device according to any one of claims 1 to 8, wherein each microwave transducer (200) is associated with a focalisation cone (202).

10. The device according to any one of claims 1 to 9, wherein the transducers (200) operate in a range of frequencies between 5 and 30GHz and very preferably between 12 and 20GHz.

11. The device according to any one of claims 1 to 10, wherein each transducer (200) is adapted to work alternatively as sender or receiver or as sender and receiver.

12. The device according to any one of claims 1 to 11, wherein the analysis means (300) are adapted to execute at least the one of the following functions:
- measuring the delay and amplitude of direct transmission of microwaves between each pair of coaxial senders (200Tx) and receiver (200Rx) located on the two opposite panels (120),
- measuring the delay and amplitude of oblique transmission of microwaves between each sender (200Tx) located on a panel (120) and the receivers (200Rx) which enclose the receiver located on the opposite coaxial panel (120) of the sender,
- measuring the delay and amplitude of the microwave wave emitted by each transducer sender (200Tx) and reflected towards the same transducer forming a receiver (200Rx) or towards the receivers (200Rx) enclosing the latter, by a leg or by a fraudulent substance placed on or around the leg,
- detection of the presence of a double echo of microwave waves reflected by a fraudulent substance and by the leg,
- comparison of microwave waves transmitted directly with a transmission reference value in a void and transmission of an alarm in case of detection of delay greater than a threshold and with an amplitude corresponding to a range of substances which delays and attenuates the microwave,
- comparison of microwave waves transmitted directly with microwaves transmitted on adjacent transducers and generation of an alarm in case of a gap greater than a threshold detected between the different signals,
- comparison of oblique microwave waves with a reference value in a void and generation of an alarm in case of detection of delay greater than a threshold and with an amplitude corresponding to a range predetermined representative of substances which delay and attenuate the microwave,
- comparison of microwave waves transmitted obliquely with the adjacent microwave waves transmitted directly and generation of an alarm in case of a gap greater than a threshold detected between the different signals,
- comparison of a double echo detected with transmission values in a void and generation of an alarm in case of detection of a delay greater than a threshold between the peaks of the two echoes with an amplitude greater than a threshold.

13. A method for inspection of the leg of an individual, by means of a device according to any one of claims 1 to 15, comprising the following steps :
- positioning a foot and a leg of an individual relative to the support base (110) and to the panels (120),
- emitting microwaves from an emitter on a panel towards a coaxial receiver (200) on the opposite panel (120), as well as towards transducers (200) adjacent to this coaxial opposite receiver (200),
- receiving microwaves from a coaxial emitter (200) on the opposite panel (120), as well as from transducers (200) adjacent to this coaxial opposite emitter (200),
- analysing the signals detected by the microwave receivers (200) corresponding to the signals transmitted from a panel (120) to the opposite panel and corresponding to the signals reflected from a panel (120) towards this same panel and
- generating an alarm when analysis reveals a gap in the transmission time or in the amplitude of the signals, relative to a reference, greater than a threshold.

14. The method according to claim 13, **characterized in that** it performs at least one of the following steps and preferably a combination of the following steps:
- measuring the delay and amplitude of direct transmission of microwaves between each pair of coaxial senders (200Tx) and receivers (200Rx) located on the two opposite panels (120),
- measuring the delay and amplitude of oblique transmission of microwaves between each sender (200Tx) located on a panel (120) and the receivers (200Rx) which enclose the receiver located on the opposite coaxial panel (120) of the sender,
- measuring the delay and amplitude of the microwave wave emitted by each transducer sender (200Tx) and reflected towards the same transducer forming a receiver (200Rx) or towards the receivers (200Rx) enclosing the latter, by a leg or by a fraudulent substance placed on or around the leg,
- detection of the presence of a double echo of microwave waves reflected by a fraudulent substance and by the leg,
- comparison of microwave waves transmitted directly with a transmission reference value in a void and transmission of an alarm in case of detection of a delay greater than a threshold and with an amplitude corresponding to a range of substances which delays and attenuates the microwave,
- comparison of microwave waves transmitted directly with microwaves transmitted on adjacent transducers and generation of an alarm in case of a gap greater than a threshold detected between the different signals,
- comparison of oblique microwave waves with a reference value in a void and generation of an alarm in case of detection of delay greater than a threshold and with an amplitude corresponding to a predetermined range representative of substances which delay and attenuate the microwave,
- comparison of microwave waves transmitted obliquely with the adjacent microwave waves transmitted directly and generation of an alarm in case of a gap greater than a threshold detected between the different signals,
- comparison of a double echo detected with transmission values in a void and generation of an alarm in case of detection of a delay greater than a threshold between the peaks of the two echoes with an amplitude greater than a threshold.
